(19)

**Europäisches Patentamt**

**European Patent Office**

**Office européen des brevets**

(11) **EP 3 508 996 A1**

(12) **DEMANDE DE BREVET EUROPEEN**

(43) Date de publication:
**10.07.2019 Bulletin 2019/28**

(51) Int Cl.:
*G06F 17/50* *(2006.01)*   *G05B 17/02* *(2006.01)*

(21) Numéro de dépôt: **18216017.6**

(22) Date de dépôt: **31.12.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **04.01.2018 FR 1850030**

(71) Demandeur: **Electricité de France**
**75008 Paris (FR)**

(72) Inventeurs:
- **NABIL, Tahar**
  **75020 PARIS (FR)**
- **JICQUEL, Jean-Marc**
  **77818 MORET SUR LOING (FR)**
- **GIRARD, Alexandre**
  **92500 RUEIL MALMAISON (FR)**
- **ROUEFF, François**
  **75634 PARIS CEDEX 13 (FR)**

(74) Mandataire: **Cabinet Plasseraud**
**66, rue de la Chaussée d'Antin**
**75440 Paris Cedex 09 (FR)**

(54) **ESTIMATION D'UN CIRCUIT ÉLECTRIQUE ÉQUIVALENT, À RÉSISTANCES ET CAPACITÉS THERMIQUES, D'UN BÂTIMENT POUR LE CONTRÔLE OPTIMAL DU CHAUFFAGE DU BÂTIMENT**

(57)    L'invention concerne la détermination d'un modèle thermique d'un bâtiment équipé d'une installation de chauffage, notamment pour un diagnostic énergétique ou une optimisation du chauffage dudit bâtiment, dans lequel on obtient:
- d'au moins un compteur de consommation d'énergie (COC) une courbe de charge de consommation d'énergie globale (CdC), par pas temporel prédéfini, ladite courbe de charge étant susceptible de contenir une charge utile (Qu) de consommation pour le chauffage du bâtiment par ladite installation ainsi qu'une charge pour des besoins de consommation non liés au chauffage du bâtiment,
- et d'un ou plusieurs objets connectés associés à des appareils respectifs, consommateurs d'énergie et non-commandés pour un apport thermique (ACN), au moins une information de marche ou d'arrêt desdits appareils (ACN),
et on détecte dans la courbe de charge (CdC) des intervalles de temps pendant lesquels les objets connectés informent d'un état d'arrêt des appareils respectifs, pour obtenir une première estimation de ladite charge utile (Qu), qui permet de corriger itérativement le modèle pour son optimisation.

**EP 3 508 996 A1**

## EP 3 508 996 A1

**Description**

L'invention concerne l'estimation de modèles thermiques de bâtiments par des méthodes d'apprentissage. Le problème, déjà décrit dans le document FR-16 57902, consiste :

- dans un premier temps à « *observer* » le comportement thermique d'un bâtiment, c'est-à-dire à mesurer par des capteurs dédiés les grandeurs d'entrée/sortie d'un modèle associé au bâtiment, puis

- dans un second temps à mettre en oeuvre une estimation statistique des paramètres du modèle à partir de ces données d'observation.

On vise ainsi une « identification de bâtiment » selon laquelle les signaux d'entrée/sortie d'un ensemble de capteurs sont enregistrés et soumis à de l'analyse de données afin d'inférer un modèle du type précité.

En identifiant un modèle dynamique, correspondant à des mesures au pas de temps infra-horaire, il est possible d'obtenir une estimation rapide des performances énergétiques du bâtiment (notamment le coefficient de déperditions thermiques, les constantes de temps, etc.) et utiliser le modèle pour implémenter une stratégie de pilotage optimal du chauffage. Le modèle peut servir alors de support notamment à la création de services d'efficacité énergétique.

Plus précisément, un modèle de bâtiment permet d'expliquer la température intérieure (mesurée par un capteur d'une part et en sortie du modèle d'autre part) en fonction de sollicitations telles que par exemple la température extérieure, le flux solaire sur le bâtiment et les apports thermiques internes (chauffage, notamment électrique). L'enjeu de l'identification précitée est donc d'avoir accès aux mesures *in-situ* de ces grandeurs. Ainsi, on s'appuie sur un réseau de capteurs.

Plus particulièrement, dans la technique décrite dans le document FR-16 57902, on s'appuie en outre sur la consommation d'énergie, notamment l'énergie électrique ou issue du gaz naturel, pour l'obtention des données quant aux apports thermiques internes. Cette consommation d'énergie, au fil du temps, est indiquée par une quantité totale de consommation par pas infra-horaire, par exemple dix minutes (par exemple pour une consommation électrique, 9kWh entre 8h00 et 8h10, 7kWh entre 8h10 et 8h20, 1kWh entre 8h20 et 8h30, 1kWh entre 8h30 et 8h40, etc.). Ces valeurs successives de consommation dans le temps sont appelées « courbe de charge » de la consommation du logement ou du bâtiment (les courbes de charge des différents logements du bâtiment étant alors agrégées en une courbe globale).

Toutefois, les courbes de charge, même si elles reflètent bien la consommation employée pour l'apport thermique interne globalement, ne donnent pas une évolution temporelle rigoureuse de l'apport thermique interne. En effet, certains appareils, alors qu'ils sont susceptibles de consommer une quantité notable de l'énergie électrique comme notamment des machines à laver (linge, vaisselle, ou autre), contribuent très peu, voire de façon négligeable, à l'apport thermique interne.

Ainsi, le modèle du document FR-16 57902 utilisant une courbe de charge telle qu'elle est donnée par un compteur de consommation typiquement (Linky® en France pour le comptage d'électricité, ou Gazpar pour le comptage de consommation de gaz naturel), peut être faussé du fait de la présence d'appareils ne contribuant pas à l'apport thermique interne.

L'invention vient améliorer la situation.

Elle part du constat que la plupart des appareils consommateurs d'énergie mais ne contribuant pas ou très peu à l'apport thermique interne sont souvent équipés d'un module de communication, en tant qu'objets connectés. A ce titre, ces appareils peuvent transmettre au moins un signal de début ou d'arrêt de fonctionnement. Une unité de traitement, recevant par ailleurs la courbe de charge d'un logement par un compteur communiquant, peut alors interpréter ces signaux pour corriger une estimation de l'apport thermique interne basée sur la courbe de charge.

Par exemple, s'il est reçu un signal selon lequel un appareil non producteur thermique a été mis en fonctionnement entre 8h10 et 8h20 de l'exemple précédent, alors cette valeur de la courbe de charge n'est pas prise en compte et seules les valeurs sur les autres intervalles sont considérées (9kWh entre 8h00 et 8h10, - , 1kWh entre 8h20 et 8h30, 1kWh entre 8h30 et 8h40, etc.)

Néanmoins, une fois l'estimation ainsi corrigée le procédé peut se poursuivre par les étapes présentées par exemple dans le document FR-16 57902.

Ainsi la présente invention vise un procédé de détermination d'un modèle thermique d'un bâtiment équipé d'au moins une installation de chauffage, notamment pour un diagnostic énergétique et/ou une optimisation du chauffage dudit bâtiment, dans lequel :

- On obtient d'au moins un compteur de consommation d'énergie une courbe de charge de consommation d'énergie globale, par pas temporel prédéfini, ladite courbe de charge étant susceptible de contenir une charge utile de consommation pour le chauffage du bâtiment par ladite installation ainsi qu'une charge pour des besoins de consommation non liés au chauffage du bâtiment,

- On obtient d'un ou plusieurs objets connectés associés à des appareils respectifs, consommateurs d'énergie et non-commandés pour un apport thermique, au moins une information de marche ou d'arrêt desdits appareils,

- On détecte dans ladite courbe de charge des intervalles de temps pendant lesquels lesdits objets connectés informent d'un état d'arrêt desdits appareils respectifs, pour obtenir une première estimation de ladite charge utile,

- En fonction de la première estimation de la charge utile et d'autres paramètres parmi au moins une température mesurée à l'intérieur du bâtiment et une température de consigne de l'installation de chauffage, on calcule au moins une première estimation grossière d'un modèle de comportement thermique du bâtiment,

- Au moins à partir de l'estimation grossière du modèle, on calcule au moins une deuxième estimation de la charge utile pour la comparer avec la première estimation de la charge utile,

- Et on répète les étapes du procédé, avec une mise à jour de l'estimation du modèle du bâtiment, jusqu'à ce qu'au moins la deuxième estimation de la charge utile approche la première estimation de la charge utile selon un critère choisi (ce critère pouvant être par exemple que ces première et deuxième estimations de la charge utile soient écartées d'une valeur absolue inférieure à un seuil choisi).

Une telle réalisation permet avantageusement de n'utiliser que des données issues de matériels préexistants sur place tels que des capteurs d'objets connectés ou encore un compteur communicant capable de délivrer une courbe de charge.

Dans une réalisation :

- En fonction de la première estimation de la charge utile et d'autres paramètres parmi au moins la température mesurée à l'intérieur du bâtiment et la température de consigne de l'installation de chauffage, on peut calculer :

    * ladite première estimation grossière du modèle de comportement thermique du bâtiment, et

    * sur une pluralité d'intervalles de temps pendant lesquels lesdits objets connectés informent d'un état d'arrêt desdits appareils, une pluralité d'estimations respectives d'une régulation mise en oeuvre par l'installation pour que la température intérieure approche la température de consigne,

- on peut sélectionner alors une meilleure estimation de régulation parmi lesdites estimations de régulation, et

- pour cette meilleure estimation de régulation et à partir de l'estimation grossière du modèle, on peut calculer au moins ladite deuxième estimation de la charge utile pour la comparer avec la première estimation de la charge utile.

Une telle réalisation permet d'affiner le modèle en s'appuyant sur une pluralité de régulations.

Les paramètres précités peuvent inclure, outre la température mesurée à l'intérieur du bâtiment et la température de consigne de l'installation de chauffage, une température extérieure au bâtiment et un degré d'ensoleillement du bâtiment.

Dans une réalisation :

- Au moins à partir de l'estimation grossière du modèle, on calcule :

    * d'une part, une deuxième estimation de la charge utile pour la comparer avec la première estimation de la charge utile,

    * et d'autre part, une estimation de la température intérieure au bâtiment pour la comparer avec la température intérieure mesurée,

- et on répète les étapes du procédé, avec une mise à jour de l'estimation du modèle du bâtiment, jusqu'à ce que :

* la deuxième estimation de la charge utile approche la première estimation de la charge utile selon un premier critère choisi (ce critère pouvant être par exemple que ces première et deuxième estimations de la charge utile soient écartées d'une valeur absolue inférieure à un premier seuil choisi), d'une part, et

* d'autre part, l'estimation de la température intérieure au bâtiment approche, selon un deuxième critère choisi, la température intérieure au bâtiment, mesurée (ce deuxième critère pouvant être par exemple que l'estimation de la température intérieure et la mesure de cette température soient écartées d'une valeur absolue inférieure à un deuxième seuil choisi).

Dans cette réalisation, l'optimisation du modèle peut s'appuyer donc à la fois sur la convergence de la charge utile estimée et sur la convergence de la température intérieure estimée par le modèle.

Dans une réalisation, le modèle de bâtiment est défini par un circuit équivalent à résistances et capacités.

Plus particulièrement, le modèle du bâtiment peut être défini par un circuit équivalent à trois résistances et deux capacités, et la première estimation grossière précitée est relative à un vecteur $\theta$ dont les coordonnées sont relatives aux cinq paramètres inconnus du circuit équivalent : les trois résistances et les deux capacités.

Dans une réalisation, le bâtiment défini selon le modèle précité opère en boucle fermée avec une régulation de la température intérieure, et pour calculer la pluralité d'estimations de la régulation mise en oeuvre par l'installation, on calcule une première estimation d'un vecteur $\eta$ désignant des paramètres de régulation du chauffage du bâtiment, ces paramètres de régulation comportant typiquement un gain de chauffage et une constante de temps.

Dans cette réalisation, la meilleure estimation de régulation $\hat{\eta}_1$ peut être obtenue par un mélange pondéré de ladite pluralité d'estimations de régulation $\hat{\eta}^{(k)}, k = 1,..., K$, comme suit :

- Pour chaque indice $k = 1,..., K$, simuler une température intérieure $\hat{T}_i^{(k)}$ à partir du modèle de bâtiment en boucle fermée et desdits paramètres parmi au moins une température mesurée à l'intérieur du bâtiment et une température de consigne de l'installation de chauffage,

- Initialiser des poids $w_{k,1} = \dfrac{1}{K}, k = 1, ..., K,$

- Pour des instants $t = 1, ..., T$ :

  * calculer une prédiction de température intérieure $\hat{T}_i(t) = \sum_{k=1}^{K} w_{k,t}\, \hat{T}_i^{(k)}(t)$ ;

  * définir un modèle agrégé d'estimation de régulation par $\hat{\eta}(t) = \sum_{k=1}^{K} w_{k,t}\, \hat{\eta}^{(k)}$;

  * mettre à jour les poids en calculant, pour chaque indice $k$, un nouveau poids :

$$w_{k,t+1} = \exp\left(-\rho \sum_{s=1}^{t}(Ti(s) - \hat{T}_i^{(k)}(s))^2\right),$$

  en appliquant un normalisation telle que $\sum_{k=1}^{K} w_{k,t+1} = 1$

- Et calculer la moyenne temporelle du modèle agrégé : $\hat{\eta}_1 = \left(\sum_{t=T-n+1}^{T} \hat{\eta}(t)\right)/n.$

La présente invention vise aussi un programme informatique comportant des instructions pour la mise en oeuvre du procédé ci-avant, lorsque ces instructions sont exécutées par un processeur.

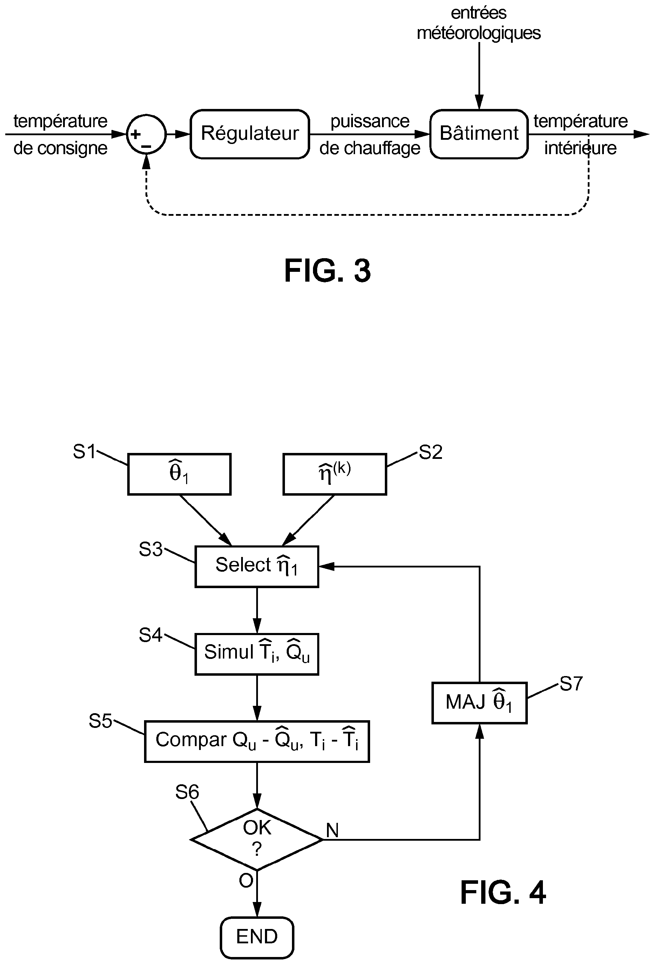

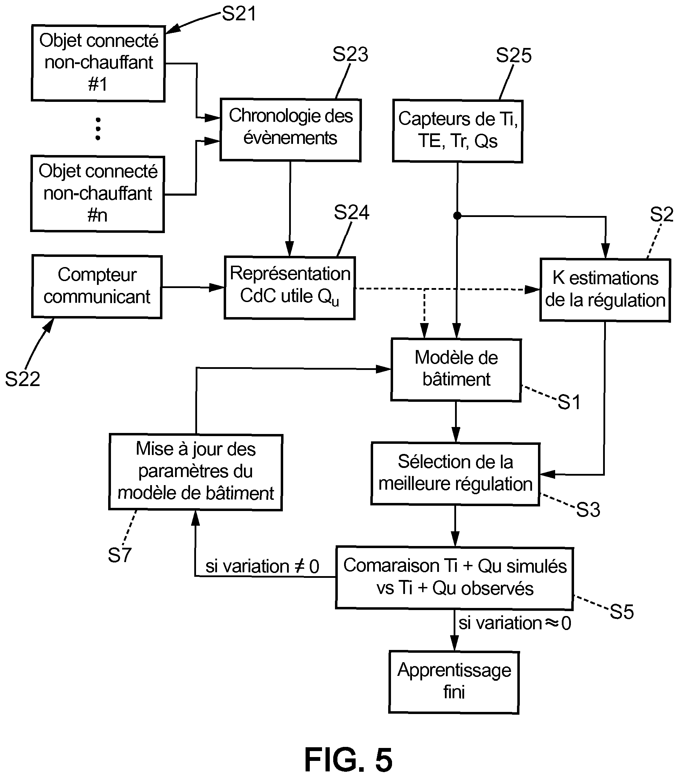

Par exemple, les figures 4 et 5 décrites ci-après peuvent illustrer un algorithme général d'un programme informatique au sens de l'invention.

La présente invention vise aussi un dispositif comportant une unité de traitement pour la mise en oeuvre du procédé ci-avant.

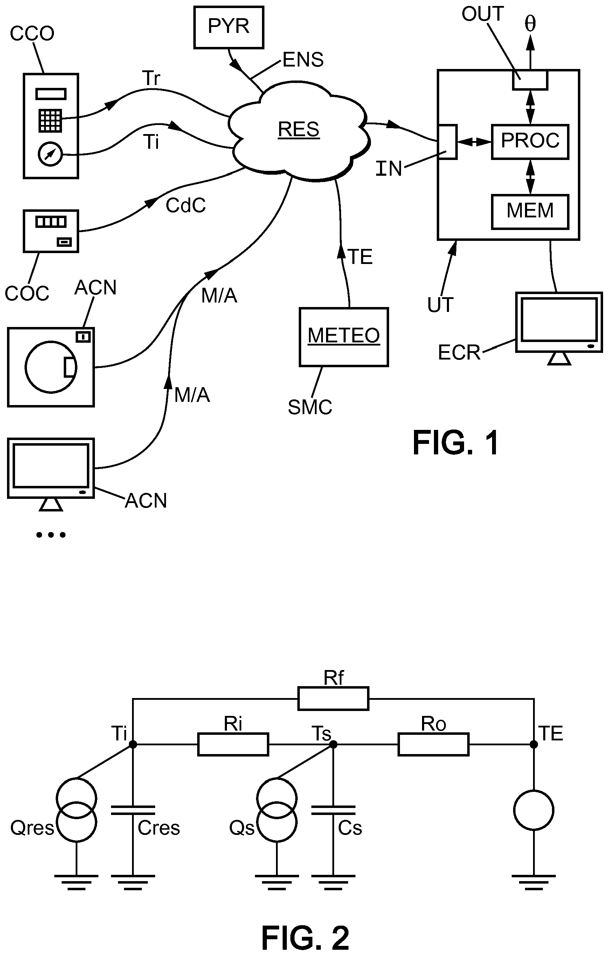

Typiquement, la figure 1 commentée ci-après présente un exemple de réalisation d'une telle unité de traitement UT.

D'ailleurs, d'autres avantages et caractéristiques apparaitront à la lecture de la description détaillée ci-dessous d'exemples de réalisation non limitatifs, et à l'examen des dessins annexés sur lesquels :

- la figure 1 illustre un système pour la mise en oeuvre de l'invention dans un exemple de réalisation,

- la figure 2 illustre un exemple de modèle de bâtiment selon un circuit équivalent de type R3C2,

- la figure 3 est un schéma bloc du comportement thermique d'un bâtiment en condition réelle d'exploitation, avec boucle de rétroaction (en traits pointillés),

- la figure 4 illustre les principales étapes de l'algorithme d'identification avec prise en compte de l'incertitude de la courbe de charge utile, selon un exemple de réalisation de l'invention, et

- la figure 5 est un exemple de schéma d'apprentissage global du comportement thermique du bâtiment à partir de la courbe de charge brute CdC,

- la figure 6 illustre une courbe de charge avec une identification des intervalles de temps $I_0$ sur lesquels la charge Q de la courbe de charge brute CdC n'est plus représentée que par une charge utile Qu qui n'est liée qu'aux besoins de chauffage du bâtiment (Q = Qu).

Il est proposé ici la prise en compte de l'incertitude sur les apports thermiques internes par un réseau de capteurs intégrant des appareils consommateurs dotés d'objets connectés. Un réseau de capteurs original pour l'identification de bâtiment s'appuie ainsi sur de tels objets connectés. De manière classique, il est supposé tout d'abord que des capteurs dédiés (thermomètres, pyranomètres) mesurent les températures intérieure et extérieure ainsi que le flux solaire localement au niveau du bâtiment. Pour la mesure des apports thermiques internes, par exemple dans un logement individuel, les apports thermiques internes peuvent être multiples : une installation de chauffage, mais également l'éclairage, les ordinateurs, etc.

Une difficulté ici est qu'on ne dispose *a priori* que de la mesure d'une unique grandeur, à savoir la courbe de charge totale du logement (consommations électriques et/ou gaz au pas de temps infra-horaire) grâce au compteur communicant Linky/Gazpar. Or cette courbe de charge totale comprend des consommations « impropres », c'est-à-dire qui ne correspondent pas à des apports thermiques dans le bâtiment (par exemple une machine à laver, une télévision, etc.). La courbe de charge totale contient donc, mais n'est pas égale à, une courbe de charge utile qui ne serait composée que d'apports thermiques et qui représente une entrée corrigée du modèle. Pour un meilleur apprentissage du modèle, on cherche donc à estimer les apports non-thermiques, afin de les retirer de la consommation totale.

Pour résoudre ce problème, il est proposé d'utiliser les informations des objets connectés du bâtiment afin d'améliorer la connaissance de la courbe de charge, et donc apprendre un modèle du bâtiment plus fidèle à son comportement réel. Plus spécifiquement, outre la courbe de charge totale mesurée par un compteur communicant, on suppose ici que la donnée de type Marche/Arrêt de chaque appareil interne au bâtiment ne correspondant pas à un usage thermique est accessible pour corriger la courbe de charge que donne le compteur de consommation. Cette donnée peut être obtenue car ces appareils incorporent de plus en plus des modules de commande à objets connectés, de sorte que cette information Marche/Arrêt est facilement accessible.

Avant de développer l'usage de cette information ci-après, il est rappelé d'abord la présentation de son contexte d'utilisation.

Il est rappelé tout d'abord la disponibilité de la mesure de la courbe de charge totale du bâtiment, grâce au déploiement des compteurs communicants (Linky®, Gazpar®). L'énergéticien a donc facilement accès à la mesure des consommations totales au pas de temps infra-horaire, voire de l'ordre de quelques minutes. Cette courbe de charge totale contient ;

- une part « chauffage » et

- une part « non-chauffage »,

sans pouvoir les distinguer *a priori,* alors que seule la part « chauffage » affecte l'état thermique du bâtiment, ce qui crée donc une incertitude.

Cette incertitude sur la courbe de charge est rarement prise en compte dans l'art antérieur sur l'identification de modèles de bâtiments. Par exemple, notamment dans le document FR-16 57902, il est spécifié que les apports thermiques internes sont mesurés par une instrumentation dédiée. Dans ce cas, l'hypothèse implicite est donc :

- que chaque appareil correspondant à un usage thermique au sein du bâtiment est équipé d'un compteur dédié, de sorte qu'en sommant toutes ces consommations on obtiendrait la courbe de charge utile (part « chauffage ») ;
- ou que le bâtiment est équipé d'un compteur communicant mesurant la consommation totale et chaque appareil qui ne correspond pas à un usage thermique est équipé d'un compteur dédié, de sorte qu'on obtiendrait la courbe de charge utile (part « chauffage ») en soustrayant ces consommations (part « non-chauffage ») de la consommation totale ;

- ou que le bâtiment est équipé uniquement du compteur communicant mesurant la consommation totale, ce qui constitue *de facto* une approximation de la courbe de charge utile, en réalité.

Ces solutions de l'état de l'art, à part la troisième solution ci-dessus, sont onéreuses et impliquent une sur-instrumentation qui représente un coût supplémentaire par rapport au seul compteur communiquant.

Une autre approche de l'état de l'art consiste à implémenter un algorithme de type NILM (pour « *Non-Intrusive Load Monitoring* », de surveillance non-intrusive de la charge des appareils) permettant de désagréger la courbe de charge totale selon les usages.

On peut citer comme travaux antérieurs relatifs à cette technique :

A. Zoha, A. Gluhak, M. A. Imran et S. Rajasegarar, «Non-intrusive load monitoring approaches for disaggregated energy sensing: A survey» Sensors, vol. 12, n° % 112, pp. 16838--16866, 2012.

Cependant, ces méthodes reposent typiquement sur une mesure à haute-fréquence (avec un pas de temps d'une seconde au plus) de la courbe de charge totale. Il faut donc ajouter une instrumentation onéreuse qui s'additionne au déploiement du compteur Linky (qui fonctionne à un pas de temps de quelques minutes).

De manière générale, il apparait que les techniques antérieures connues mettent en oeuvre une instrumentation complémentaire onéreuse, ou négligent l'incertitude (en conservant uniquement la consommation totale qui englobe la courbe de charge utile). Cette dernière solution est une bonne première approximation, mais elle n'est pas satisfaisante car en incluant des consommations non-chauffage dans la courbe de charge utile, on suppose que le bâtiment a consommé plus que ce qu'il a réellement consommé pour le chauffage. Ainsi, le modèle thermique appris à partir de ces données comporte un biais et le modèle est moins performant thermiquement que ne l'est le bâtiment en réalité. Ce biais se répercute à la fois sur le diagnostic énergétique du bâtiment et sur la stratégie de pilotage du chauffage.

Pour remédier aux défauts des deux approches de l'état de l'art, il est proposé d'utiliser ici les informations des objets connectés pour compléter la mesure de la donnée de type Linky. Le coût d'implémentation est donc faible, voire nul car il est proposé d'utiliser des objets connectés déjà présents dans le bâtiment. L'incertitude n'est pas éliminée pour autant, car seule une information de type marche/arrêt est requise pour respecter cette exigence de coût faible, et non la consommation spécifique de chaque objet. L'objet du développement ci-après est donc de déduire néanmoins de cette seule information et des autres paramètres usuels (courbe de charge totale, mesures de température interne/externe du bâtiment, etc.) un modèle fonctionnel, car plus réaliste qu'un modèle s'appuyant simplement sur une courbe de charge totale, non corrigée.

Les hypothèses principales ci-après sont faites par la suite de la présente description:

(H1) La courbe de charge totale est mesurée à un pas de temps infra-horaire.

(H2) Une chronologie des événements marche/arrêt des charges qui ne chauffent pas est également disponible (par des objets connectés à un centre de traitement des courbes de charge, comme illustré sur la figure 1 présentée ci-après).

(H3) Les températures intérieure et extérieure, les gains solaires sont mesurés à un pas de temps infra-horaire, par des capteurs associés à ces grandeurs, de même que la température de consigne.

(H4) La puissance maximale que peut délivrer l'installation de chauffage, notée $Q_h^{max}$, est connue.

En référence à la figure 1, afin de respecter les hypothèses précédentes, l'invention peut par exemple s'appuyer sur un réseau de capteurs formé :

- d'un thermostat et d'une interface de saisie d'une chaudière connectée CCO (électrique ou à gaz), pour recueillir la température intérieure mesurée TI, ainsi que la température de consigne Tr,

- d'un compteur communicant COC (par exemple Linky®, Gazpar®) remontant la courbe de charge non corrigée CdC,

- d'une station météorologique connectée SMC, pour remonter des données de température extérieure locale TE, notamment,

- d'un pyranomètre PYR, pour mesurer un degré d'ensoleillement sur le bâtiment ENS, et

- des objets connectés d'appareils ACN non-chauffant, ou non-commandés pour le chauffage, du bâtiment (par exemple une machine à laver, un lave-vaisselle, un poste de télévision, un ballon d'eau chaude sanitaire, etc.),

remontant la simple information de marche/arrêt A/M.

Toutes ces données sont transmises par exemple via un réseau RES à une unité de traitement UT, équipée par exemple :

- D'une interface de réception IN de ces données reçues du réseau RES,
- D'un processeur PROC capable de traiter ces données pour la mise en oeuvre de l'invention,
- D'une mémoire MEM apte à stocker notamment des instructions d'un programme informatique au sens de l'invention, pour mettre en oeuvre l'invention lorsque ces instructions sont exécutées par le processeur PROC,
- Et d'une interface de sortie OUT apte à délivrer les données d'un circuit électrique équivalent au comportement thermique du bâtiment.

Ces données de circuit électrique équivalent au comportement thermique du bâtiment peuvent être ensuite affichées sur l'écran ECR par exemple. Elles permettent typiquement d'établir un diagnostic énergétique du bâtiment, dans lequel une optimisation de l'isolation thermique et/ou du fonctionnement d'une ou plusieurs installations de chauffage du bâtiment peut être recherchée.

Ces données de circuit électrique équivalent peuvent être encore utilisées pour réaliser d'autres calculs, notamment statistiques pour déterminer une consommation globale de plusieurs bâtiments d'une région, voire anticiper la consommation de cette région en prévision de futures températures données par les prévisions météorologiques, et ce afin d'optimiser la production d'énergie notamment électrique.

On considère ci-après un bâtiment représenté par un circuit électrique équivalent de type à trois résistances et deux capacités R3C2, représenté en figure 2. Ce modèle a déjà été présenté dans le document FR-16 57902. Dans la suite, le vecteur $\theta$ désigne les cinq paramètres inconnus du circuit R3C2, c'est-à-dire les trois résistances Rf, Ro, Ri et les deux capacités Cres et Cs.

Par ailleurs, en saison de chauffe, le bâtiment fonctionne en boucle fermée, c'est-à-dire qu'il y a régulation de la température intérieure comme illustré sur la figure 3. Le vecteur $\eta$ désigne alors les paramètres de la régulation du bâtiment, c'est-à-dire de l'installation de chauffage. Par exemple dans le cas d'un correcteur PI (Proportionnel-Intégral), $\eta$ regroupe le gain et la constante de temps.

Les notations suivantes sont adoptées :

- $Q(t)$ est la courbe de charge totale à l'instant t, et elle se décompose comme suit :
  $Q(t) = Q_u(t) + Q_{nh}(t)$, où $Q_u(t)$ est la courbe de charge utile et $Q_{nh}(t)$ correspond aux usages qui ne chauffent pas ;

- La courbe de charge utile $Q_u(t)$ se décompose elle-même en $Q_u(t) = Q_h(t) + Q_{fg}(t)$, avec $Q_h(t)$ la consommation de l'installation de chauffage (i.e. les apports thermiques internes commandés) et $Q_{fg}(t)$ pour les apports thermiques matériels internes non-commandés, intrinsèques à certains fonctionnements (éclairage, ordinateurs, poste de télévision, etc.) ;

- L'entrée $Q_{res}(t)$ du modèle R3C2 en figure 2 est $Q_{res}(t) = Q_u(t) + Q_m(t)$, avec $Q_m(t)$ les gains métaboliques, non-pris en compte dans cette description.

L'instrumentation donne donc accès à $Q(t)$ (hypothèse H1) et à la fonction indicatrice $\chi_{nh}(t) = 0$ si $Q_{nh}(t) = 0, \chi_{nh}(t) = 1$ sinon (hypothèse H2).

Ainsi, il est possible de décomposer la courbe de charge totale sur un ensemble d'intervalles de temps disjoints pour lesquels on a soit $Q(t) = Q_u(t)$ (100% chauffage), soit $Q(t) > Q_u(t)$ (la part « chauffage » étant inconnue).

Soit $I_0$ l'ensemble des intervalles pour lesquels $Q(t) = Q_u(t)$, et $I_1$ l'ensemble des autres intervalles, pour lesquels on a alors $Q(t) > Q_u(t)$.

Dans ce contexte, on cherche alors à fournir un procédé d'estimation de $\theta$ à partir des enregistrements des grandeurs Text (température extérieure), Ti (température intérieure), Tr (température de consigne), Qs (apports solaires), Q et $\chi_{nh}$.

A cet effet, on prévoit deux étapes principales :

- une première estimation $\hat{\theta}_1$ de $\theta$ à partir des données mesurées sur $I_0$, i.e. sur les intervalles 100% « chauffage » ;

- une correction ensuite de $\hat{\theta}_1$ en utilisant toutes les données, y compris celles sur $I_1$.

L'étape de correction est effectuée en comparant notamment la trajectoire de la température intérieure observée à celle simulée par le modèle. Cela implique en particulier d'apprendre un modèle de régulation $\hat{\eta}_1$ qui génère une

commande de chauffage pour que la température simulée atteigne la consigne.

Il convient de noter que cette approche est complètement en accord avec la pratique courante de consommation laissant de grandes plages de temps par exemple en journée pendant lesquelles les habitants d'un bâtiment ne sont pas présents (au travail, à l'école, etc.) et seuls les appareils de chauffage fonctionnent tandis que les appareils connectés de type machine à laver, poste de télévision, etc. sont à l'arrêt. Il peut être profité de ces plages de temps $I_0$ pour effectuer la première estimation $\hat{\theta}_1$ de $\theta$, pendant laquelle la plupart des objets connectés remontent une donnée d'arrêt de l'appareil associé.

Le diagramme de la figure 4 précise les différentes étapes de la stratégie d'identification à partir des informations des objets connectés.

L'étape S1 est une première estimation $\hat{\theta}_1$ de $\theta$ à partir des données mesurées sur $I_0$. Sur $I_0$, l'observation du bâtiment est exacte, puisque la courbe de charge totale est la courbe de charge utile. La première estimation peut donc se faire par une adaptation immédiate d'une méthode de reposant sur un algorithme d'Expectation-Maximisation et décrite par exemple dans FR-16 57902.

Parallèlement, à l'étape S2, pour chaque sous-intervalle contenu dans l'ensemble $I_0$, on procède à une estimation d'une régulation $\hat{\eta}^{(k)}$. En ne retenant que les intervalles ayant suffisamment de données en régime « linéaire » (typiquement lorsque le chauffage n'est ni à 0 ni à la puissance maximale), on obtient ainsi K estimateurs $\hat{\eta}^{(k)}$, $k = 1,...,$ $K$ de la régulation. Dans le cas d'un correcteur PI, on pourra par exemple implémenter une méthode du type des moindres carrés ordinaires pour apprendre les deux paramètres (gain, constante de temps). Chaque estimateur est appris à partir des données Q, Ti, Tr mesurées sur l'intervalle de temps correspondant. En particulier, sur chacun de ces intervalles, on a bien $Q(t) = Q_u(t)$, c'est-à-dire que la consommation est à 100% liée au chauffage. En revanche, la part d'apports thermiques non-commandés (notée $Q_{fg}(t)$), n'est pas connue mais incluse dans la mesure $Q_u(t)$. Cette part (liée aux appareils chauffants « involontairement » tels qu'un four traditionnel, une télévision, un ordinateur, etc.) fausse donc l'estimation de $\hat{\eta}^{(k)}$ puisque la régulation correspond uniquement aux apports thermiques commandés $Q_h(t)$ (et pas à $Q_u(t) = Q_u(t) + Q_{fg}(t)$).

Ainsi, chacun des estimateurs est potentiellement biaisé, et il est donc préférable de mettre en oeuvre une stratégie de sélection du meilleur modèle de régulation. C'est l'objet de l'étape suivante S3.

Ainsi, à l'étape S3, le « meilleur » estimateur $\hat{\eta}_1$ est construit comme mélange pondéré des estimateurs $\hat{\eta}^{(k)}$, $k = 1,..., K$ obtenus à l'étape précédente et appelés «experts». Il s'agit d'une stratégie construite par analogie avec les méthodes d'agrégation statistique de prédicteurs, par exemple comme suit:

1) Pour chaque $k = 1,..., K$, simuler une température intérieure $\hat{T}_i^{(k)}$ à partir du modèle de bâtiment en boucle fermée $(\hat{\theta}_1, \hat{\eta}^{(k)})$ et des observations Text(t), Qs(t), Tr(t).

2) Initialiser les poids $w_{k,1} = \dfrac{1}{K}, k = 1, \dots, K.$

3) Pour $t = 1,..., T$ :

a. on calcule la prédiction $\hat{T}_i(t) = \sum_{k=1}^{K} w_{k,t}\, \hat{T}_i^{(k)}(t)$ ;

b. on pose le modèle agrégé $\hat{\eta}(t) = \sum_{k=1}^{K} w_{k,t}\, \hat{\eta}^{(k)}$;

c. on met à jour les pondérations : pour chaque k, on calcule le nouveau poids

$$w_{k,t+1} = \exp\left(-\rho \sum_{s=1}^{t} (Ti(s) - \hat{T}_i^{(k)}(s))^2\right),$$ en normalisant de sorte que :

$$\sum_{k=1}^{K} w_{k,t+1} = 1.$$

4) On calcule ensuite la moyenne temporelle du modèle agrégé :

$$\hat{\eta}_1 = \left(\sum_{t=T-n+1}^{T} \hat{\eta}(t)\right)/n.$$

La démarche présentée ici à titre d'exemple consiste donc à agréger les prédictions (étapes S3-3)a. et S3-3)c.) puis à appliquer les pondérations ainsi obtenues au modèle de régulation (étape S3-3)b.). L'agrégation est séquentielle dans le temps (boucle sur t), c'est pourquoi l'étape S3-4) effectue une moyenne temporelle sur les *n* dernières itérations, lorsque le mélange s'est stabilisé, afin d'obtenir un modèle final $\hat{\eta}_1$ indépendant du temps.

Cette étape dépend d'un paramètre $\rho$, appelé taux d'apprentissage, qui peut être défini par un utilisateur ou par validation croisée sur une grille de valeurs.

Une fois $\hat{\theta}_1$ et $\hat{\eta}_1$ estimés, à la quatrième étape S4 de la figure 4, on simule une température intérieure $\hat{T}_i$ et une courbe de charge utile équivalente $\hat{Q}_u$ à partir du modèle de bâtiment en boucle fermée $(\hat{\theta}_1, \hat{\eta}_1)$ et des observations des signaux Text(t), Qs(t), Tr(t). La simulation $\hat{Q}_u$ est une courbe utile équivalente, car elle inclut une compensation par l'installation de chauffage des apports internes non-commandés et non-observés.

A l'étape S5, on évalue la précision des trajectoires simulées à l'étape S4, en calculant respectivement l'erreur quadratique moyenne de la température intérieure :

$$\varepsilon_{ti} := \sqrt{\frac{1}{T}\sum_{t=1}^{T}(T_i(t) - \hat{T}_i(t))^2}$$

et l'erreur quadratique moyenne de la courbe de charge utile :

$$\varepsilon_{qu} := \sqrt{\frac{1}{|\mathcal{T}|}\sum_{t\in\mathcal{T}}(Q(t) - \hat{Q}_u(t))^2},$$

où l'ensemble $\mathcal{T}$ désigne l'ensemble des instants t tels que $\mathcal{T} := \{t | t \in I_0, Q(t) \le Q_h^{max}\}.$

En effet, ce second critère est restreint à l'ensemble $\mathcal{T}$ car pour que la comparaison soit valide, il faudrait comparer la courbe de charge utile simulée $\hat{Q}_u$ à la courbe de charge utile réelle $Q_u$. Cette dernière étant inconnue, il faut *a minima* se restreindre aux instants auxquels la courbe de charge mesurée est la courbe de charge utile (sur $I_0$ donc). De plus, on sait que la courbe de charge utile simulée ne peut pas dépasser $Q_h^{max}$ par construction.

L'étape S6 est une étape de test de vérification de convergence de l'algorithme. On compare la somme des erreurs quadratiques moyennes des trajectoires respectives de la température intérieure et de la courbe de charge utile, calculées lors de l'étape S5. Si la variation tombe sous un certain seuil, par exemple 1% ou 0,1%, alors le test est positif : l'algorithme a convergé (flèche O en sortie du test S6). Sinon le test est négatif (flèche N en sortie du test S6) et une mise à jour des paramètres est effectuée à l'étape S7, comme suit.

En cas de test négatif à l'étape 6, la dernière étape S7 cherche en particulier à corriger l'estimation du modèle $\theta$ du bâtiment (sans modifier la régulation $\eta$). Pour cela, on prévoit de minimiser un coût, par exemple la quantité

$$J(\theta) := \lambda_1 \frac{\varepsilon_{ti}(\theta, \hat{\eta}_1)}{\overline{T_i}} + \lambda_2 \frac{\varepsilon_{qu}(\theta, \hat{\eta}_1)}{\overline{Q_u}} + \frac{1}{2}||\theta - \hat{\theta}_1||^2_{\Lambda_3^{-1}},$$

avec :

- $\overline{T_i}$ et $\overline{Q_u}$ les moyennes temporelles respectives des trajectoires observées Ti et Qu,

- $\lambda_1$ $\lambda_2$ sont des scalaires, et

- $\Lambda_3$ une matrice,

ces paramètres étant choisis pour pondérer les importances relatives des trois termes apparaissant dans $J(\theta)$.

La notation générique $||x||^2_S := x^T S x$ désigne la norme du vecteur *x* dans la base déterminée par *S*. Ainsi, les deux premiers termes de $J(\theta)$ sont des termes d'attache aux données, tandis que le troisième terme est une régularisation qui restreint la recherche dans un voisinage de la première estimation $\hat{\theta}_1$. Il peut donc correspondre à une distribution *a priori* des paramètres de loi normale, dans une interprétation Bayésienne.

La minimisation du coût $J(\theta)$ par des moyens logiciels conduit donc à une mise à jour des paramètres estimés $\hat{\theta}_1$ du modèle de bâtiment. L'algorithme est ensuite itéré jusqu'à convergence ou atteinte d'un nombre maximal d'itérations, en reprenant l'étape S3. En effet, l'étape S2 ne dépend pas du modèle de bâtiment $\theta$. En revanche, $\hat{\theta}_1$ impacte bien la stratégie de sélection de la meilleure régulation dans l'étape S3.

L'invention peut être mise en oeuvre en pratique en prévoyant simplement le déploiement d'un capteur de température intérieure et d'un moyen de mesure de la température de consigne (par exemple via un thermostat connecté), d'un capteur de température extérieure, d'un système de mesure du flux solaire (un pyranomètre ou tout autre système moins onéreux), d'un compteur électrique communicant au pas de temps infra-horaire. L'ensemble de ces données doivent être accessibles typiquement au pas de temps 10 minutes. Enfin, le dernier élément requis pour la mise en oeuvre de l'invention est un système de centralisation des informations Marche/Arrêt envoyées par les objets connectés qui ne chauffent pas au sein du bâtiment (lave-vaisselle, machine à laver, etc.)

On a illustré sur la figure 5 des étapes qui peuvent être mises en oeuvre en pratique dans un exemple de réalisation, pour l'apprentissage global du comportement thermique du bâtiment en utilisant les calculs présentés en détails sur la figure 4.

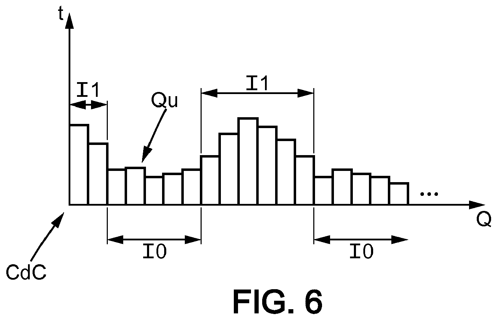

Ainsi, à l'étape S21, les objets connectés associés aux appareils non-chauffants remontent des périodes d'arrêt de ces appareils permettant à l'étape S23 de définir une chronologie des évènements et en particulier les intervalles de temps $I_0$ pour lesquels la charge de consommation donnée par la courbe de charge brute CdC n'est liée qu'aux besoins de chauffage. Sur ces intervalles, il est alors possible d'accéder à la charge utile Qu qui n'est liée qu'aux besoins de chauffage, dans la courbe de charge brute CdC. Cette situation est illustrée sur la figure 6.

Cette identification des intervalles $I_0$ permet de déterminer à l'étape S24 la charge utile Qu à partir des données de la courbe de charge brute CdC, issue du compteur communicant à l'étape S22.

Parallèlement, à l'étape S25, on obtient en outre les mesures ou prévisions relativement à :

- la température extérieure Text
- la température intérieure Ti,
- la température de consigne Tr, et
- aux apports solaires Qs.

La représentation de la charge utile Qu et ces mesures permettent de calculer :

- d'une part et selon un calcul correspondant à la description de la première étape S1 présentée plus haut, une première estimation du vecteur $\theta$ dont les coordonnées sont relatives aux cinq paramètres inconnus du circuit R3C2, définissant le modèle du bâtiment, et
- d'autre part et selon un calcul correspondant à la description de la deuxième étape S2 présentée plus haut, une première estimation du vecteur $\eta$ désignant les paramètres de la régulation du chauffage du bâtiment (ces paramètres regroupant typiquement le gain de chauffage et la constante de temps), en rappelant que le bâtiment fonctionne en boucle fermée avec une régulation de la température intérieure comme illustré sur la figure 3. On peut alors procéder aux différentes estimations du vecteur $\eta$ sur les intervalles respectifs de type $I_0$ sur lesquels la consommation n'est liée qu'au chauffage (et relative à une charge utile Qu), et obtenir ainsi K estimations de la régulation du chauffage.

On peut alors poursuivre le procédé comme illustré sur la figure 4 précédemment détaillée, avec en particulier la sélection de la meilleure régulation parmi les K estimations et la mise à jour du modèle de bâtiment correspondant, et ce par comparaisons itératives (jusqu'à convergence) :

- entre la température intérieure calculée par le modèle de bâtiment, et la température réellement mesurée (par le thermostat typiquement), d'une part, et
- entre la charge utile calculée par le modèle de bâtiment, et la charge utile réellement mesurée sur la courbe brute CdC dans les intervalles $I_0$, d'autre part.

L'invention permet alors de tirer profit du contexte des objets connectés, en faisant une hypothèse raisonnable sur le type d'information qui peut être extraite des objets connectés. Plutôt que de supposer que chaque objet connecté associé à un appareil consommant est capable d'évaluer la consommation de l'appareil de façon fiable, la solution proposée requiert uniquement l'information Marche/Arrêt de l'appareil. Cette information permet donc de réduire l'incertitude sur la courbe de charge totale mesurée par le compteur, en identifiant des intervalles pour lesquels il est certain que la mesure correspond exactement aux apports thermiques matériels internes.

L'un des avantages de l'invention est alors qu'elle permet de réduire le biais d'estimation lors de l'apprentissage du comportement thermique du bâtiment, sans recourir à une instrumentation supplémentaire onéreuse.

Bien entendu, la présente invention ne se limite pas aux formes de réalisation décrites ci-avant à titre d'exemples possibles de réalisation ; elle s'étend à d'autres variantes.

Par exemple, l'invention s'applique tout aussi bien en modifiant le modèle de bâtiment. En effet, tout circuit électrique équivalent convient, et plus généralement, tout modèle sous forme de représentation d'état discrète.

En outre, différentes étapes du traitement représenté en figures 4 ou 5 ci-avant peuvent être réalisées de façon alternative. Par exemple, pour l'étape S1, toute méthode permettant l'estimation d'un modèle de bâtiment à partir de l'observation exacte de sa courbe de charge utile est valable. Pour l'étape S2, toute méthode d'estimation d'un modèle de régulation, linéaire ou non-linéaire, convient. On peut par exemple envisager des méthodes robustes prenant en compte l'incertitude des données d'entrée (puisque on souhaiterait avoir accès à $Q_h(t)$ mais qu'on ne mesure que $Q_u(t)$ = $Q_h(t)$ + $Q_{fg}(t)$). De même pour l'étape S3, toute stratégie non-supervisée de sélection du meilleur modèle convient. Pour l'étape S5, des critères alternatifs à l'erreur quadratique moyenne peuvent être envisagés (erreur en moyenne absolue, etc.). Enfin, pour l'étape S7, le *coût J(θ)* peut être remplacé par toute fonction d'attache aux données, jugée plus adaptée.

En outre, on a illustré sur la figure 1 un système pour la mise en oeuvre de l'invention faisant intervenir ici un réseau RES de communication. En variante, on peut prévoir un traitement local, au sein-même du compteur COC, recevant des objets connectés les notifications de marche/arrêt des appareils connectés, avec éventuellement une remontée du modèle de bâtiment que calcule le compteur à un serveur distant. Ainsi, dans une telle réalisation l'unité de traitement UT est intégrée au compteur communicant COC.

On a présenté ici un traitement en lien avec une installation de chauffage, mais les mêmes principes s'appliquent de façon équivalente à une installation de climatisation.

## Revendications

1. Procédé de détermination d'un modèle thermique d'un bâtiment équipé d'au moins une installation de chauffage, notamment pour un diagnostic énergétique et/ou une optimisation du chauffage dudit bâtiment, dans lequel :

   - On obtient (S22) d'au moins un compteur de consommation d'énergie (COC) une courbe de charge de consommation d'énergie globale (CdC), par pas temporel prédéfini, ladite courbe de charge étant susceptible de contenir une charge utile (Qu) de consommation pour le chauffage du bâtiment par ladite installation ainsi qu'une charge pour des besoins de consommation non liés au chauffage du bâtiment,
   - On obtient (S21) d'un ou plusieurs objets connectés associés à des appareils respectifs, consommateurs d'énergie et non-commandés pour un apport thermique (ACN), au moins une information de marche ou d'arrêt desdits appareils (ACN),
   - On détecte dans ladite courbe de charge (CdC) des intervalles de temps ($I_0$) pendant lesquels lesdits objets connectés informent d'un état d'arrêt desdits appareils respectifs, pour obtenir (S24) une première estimation de ladite charge utile (Qu),
   - En fonction de la première estimation de la charge utile (Qu) et d'autres paramètres parmi au moins une température mesurée à l'intérieur du bâtiment (Ti) et une température de consigne de l'installation de chauffage (Tr), on calcule au moins une première estimation grossière d'un modèle de comportement thermique du bâtiment (S1),
   - Au moins à partir de l'estimation grossière du modèle, on calcule au moins une deuxième estimation de la charge utile (S5) pour la comparer avec la première estimation de la charge utile,
   - Et on répète les étapes du procédé, avec une mise à jour de l'estimation du modèle du bâtiment (S7), jusqu'à ce qu'au moins la deuxième estimation de la charge utile approche la première estimation de la charge utile (Qu) selon un critère choisi.

2. Procédé selon la revendication 1, dans lequel :

   - En fonction de la première estimation de la charge utile (Qu) et d'autres paramètres parmi au moins la température mesurée à l'intérieur du bâtiment (Ti) et la température de consigne de l'installation de chauffage (Tr), on calcule :

     * ladite première estimation grossière du modèle de comportement thermique du bâtiment (S1), et
     * sur une pluralité d'intervalles de temps ($I_0$) pendant lesquels lesdits objets connectés informent d'un état d'arrêt desdits appareils, une pluralité (K) d'estimations respectives d'une régulation mise en oeuvre par l'installation pour que la température intérieure (Ti) approche la température (Tr) de consigne (S2),

- on sélectionne une meilleure estimation de régulation parmi lesdites estimations de régulation (S3), et
- pour cette meilleure estimation de régulation et à partir de l'estimation grossière du modèle, on calcule au moins ladite deuxième estimation de la charge utile (S5) pour la comparer avec la première estimation de la charge utile.

3. Procédé selon l'une des revendications précédentes, dans lequel lesdits paramètres incluent, outre la température mesurée à l'intérieur du bâtiment (Ti) et la température de consigne de l'installation de chauffage (Tr), une température extérieure au bâtiment (TE) et un degré d'ensoleillement du bâtiment (ENS, Qs).

4. Procédé selon l'une des revendications précédentes, dans lequel :

   - Au moins à partir de l'estimation grossière du modèle, on calcule :

     * d'une part, une deuxième estimation de la charge utile (S5) pour la comparer avec la première estimation de la charge utile,
     * et d'autre part, une estimation de la température intérieure au bâtiment pour la comparer avec la température intérieure mesurée (Ti),

   - et on répète les étapes du procédé, avec une mise à jour de l'estimation du modèle du bâtiment (S7), jusqu'à ce que :

     * la deuxième estimation de la charge utile approche la première estimation de la charge utile (Q(u)) selon un premier critère choisi, d'une part, et
     * d'autre part, l'estimation de la température intérieure au bâtiment approche, selon un deuxième critère choisi, la température intérieure au bâtiment, mesurée (Ti).

5. Procédé selon l'une des revendications précédentes, dans lequel le modèle de bâtiment est défini par un circuit équivalent à résistances et capacités.

6. Procédé selon la revendication 5, dans lequel le modèle du bâtiment est défini par un circuit équivalent à trois résistances et deux capacités, et la première estimation grossière est relative à un vecteur $\theta$ dont les coordonnées sont relatives aux cinq paramètres inconnus du circuit équivalent : les trois résistances et les deux capacités.

7. Procédé selon la revendication 2, dans lequel le bâtiment selon ledit modèle opère en boucle fermée avec une régulation de la température intérieure, et pour calculer la pluralité (K) d'estimations de la régulation mise en oeuvre par l'installation, on calcule une première estimation d'un vecteur $\eta$ désignant des paramètres de régulation du chauffage du bâtiment, lesdits paramètres de régulation comportant un gain de chauffage et une constante de temps.

8. Procédé selon la revendication 7, dans lequel la meilleure estimation de régulation $\hat{\eta}_1$ est obtenue par un mélange pondéré de ladite pluralité d'estimations de régulation $\hat{\eta}^{(k)}$, $k = 1,..., K,$ comme suit :

   - Pour chaque indice $k = 1,..., K$, simuler une température intérieure $\hat{T}_i^{(k)}$ à partir du modèle de bâtiment en boucle fermée et desdits paramètres parmi au moins une température mesurée à l'intérieur du bâtiment (Ti) et une température de consigne de l'installation de chauffage (Tr),

   - Initialiser des poids $w_{k,1} = \dfrac{1}{K}, k = 1, ..., K,$

   - Pour des instants $t = 1,..., T$ :

     * calculer une prédiction de température intérieure $\hat{T}_i(t) = \sum_{k=1}^{K} w_{k,t} \hat{T}_i^{(k)}(t)$ ;

     * définir un modèle agrégé d'estimation de régulation par $\hat{\eta}(t) = \sum_{k=1}^{K} w_{k,t} \hat{\eta}^{(k)}$;

     * mettre à jour les poids en calculant, pour chaque indice $k$, un nouveau poids :

$$w_{k,t+1} = \exp\left(-\rho \sum_{s=1}^{t} (Ti(s) - \hat{T}_i^{(k)}(s))^2\right),$$

en appliquant un normalisation telle que $\sum_{k=1}^{K} w_{k,t+1} = 1$

- Et calculer la moyenne temporelle du modèle agrégé : $\hat{\bar{\eta}}_1 = \left( \sum_{t=T-n+1}^{T} \hat{\eta}(t) \right) / n.$

9. Programme informatique comportant des instructions pour la mise en oeuvre du procédé selon l'une des revendications 1 à 8, lorsque lesdites instructions sont exécutées par un processeur.

10. Dispositif comportant une unité de traitement (UT) pour la mise en oeuvre du procédé selon l'une des revendications 1 à 8.

**FIG. 1**

**FIG. 2**

entrées
météorologiques

température ────→ (+ −) ────→ | Régulateur | ──puissance──→ | Bâtiment | ──température──→
de consigne                           de chauffage                    intérieure

# FIG. 3

S1 ── $\widehat{\theta}_1$          $\widehat{\eta}^{(k)}$ ── S2

S3 ── Select $\widehat{\eta}_1$

S4 ── Simul $\widehat{T}_i$, $\widehat{Q}_u$

S5 ── Compar $Q_u - \widehat{Q}_u$, $T_i - \widehat{T}_i$

MAJ $\widehat{\theta}_1$ ── S7

S6 ── OK ? ── N

O

END

# FIG. 4

**FIG. 5**

FIG. 6

Europäisches
Patentamt

European
Patent Office

Office européen
des brevets

## RAPPORT DE RECHERCHE EUROPEENNE

Numéro de la demande

EP 18 21 6017

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Jeremy Phan: "Sense Electricity Monitor: 2 Week Review", You Tube, 12 octobre 2016 (2016-10-12), page 1, XP054978584, Extrait de l'Internet: URL:https://www.youtube.com/watch?v=Mvvf-1YHv6Q&feature=youtu.be [extrait le 2018-08-14] * Titre * * 3:35 * * 4:33-4:38 * * 5:20-6:00 * * le document en entier * ----- | 1-10 | INV. G06F17/50 G05B17/02 |
| X | Chadia Zayane: "Identification d'un modèle de comportement thermique de bâtiment à partir de sa courbe de charge", , 11 janvier 2011 (2011-01-11), pages 1-151, XP055367577, Extrait de l'Internet: URL:https://tel.archives-ouvertes.fr/paste1-00590810/document [extrait le 2017-04-26] * sections 1.1-1.3 * * sections 4.1-4.2.3 * * sections 5.2-5.2.2 * * le document en entier * ----- | 1-10 | |

DOMAINES TECHNIQUES RECHERCHES (IPC)

G06F
G05B

-/--

Le présent rapport a été établi pour toutes les revendications

| Lieu de la recherche | Date d'achèvement de la recherche | Examinateur |
|---|---|---|
| Munich | 8 mai 2019 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 18 21 6017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NABIL TAHAR ET AL: "Maximum likelihood estimation of a low-order building model", 2016 24TH EUROPEAN SIGNAL PROCESSING CONFERENCE (EUSIPCO), EURASIP, 29 août 2016 (2016-08-29), pages 702-707, XP033011027, DOI: 10.1109/EUSIPCO.2016.7760339 * page 702, seconde colonne, paragraphes 2-3 * * page 703, première colonne, paragraphes 1-2 * * page 704, algorithme 1 * * Page 706, section IV.A * * section V * * le document en entier * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 8 mai 2019 | Joris, Pierre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1657902

**Littérature non-brevet citée dans la description**

- **A. ZOHA ; A. GLUHAK ; M. A. IMRAN ; S. RAJAS-EGARAR.** Non-intrusive load monitoring approaches for disaggregated energy sensing: A survey. *Sensors,* 2012, vol. 12 (112), 16838-16866